# FASCICULE DE BREVET EUROPEEN

(11) **EP 0 871 314 B1**
(45) Date de publication et mention de la délivrance du brevet: **09.11.2005**
(21) Numéro de dépôt: 98200970.6
(22) Date de dépôt: 27.03.1998
(51) Int. Cl.: H04M 1/72

(54) **Appareil téléphonique comportant une station de base et au moins un dispositif d'abonné et procédé correspondant**
Telefon mit einer Basisstation und mindestens einem Endgerät und entsprechendes Verfahren
Telephone with a base station and at least a subscriber station, and a method for using such a telephone

(30) Priorité: 11.04.1997 FR 9704456
(43) Date de publication de la demande: 14.10.1998
(73) Titulaire: Koninklijke Philips Electronics N.V., 5621 BA Eindhoven (NL)
(72) Inventeur: Cronin, Gérard, Société Civile S.P.I.D., 75008 Paris (FR); Lorieau, Christophe, Société Civile S.P.I.D., 75008 Paris (FR); De Crouy-Chanel, Rémy Société Civile S.P.I.D., 75008 Paris (FR)
(74) Mandataire: Chaffraix, Jean

(56) Documents cités:
- EP-A- 0 208 080
- DE-A- 19 629 535
- GB-A- 2 304 002
- LENCHIK V ET AL: "METHOD FOR REMOTE SIGNALING SUBSCRIBER UNIT INTO VOX MODE" MOTOROLA TECHNICAL DEVELOPMENTS, vol. 22, 1 juin 1994, page 74 XP000456725

## Description

L'invention concerne un appareil téléphonique comportant une station de base connectable au réseau commuté, au moins un premier et un deuxième dispositif d'abonné connectables au réseau commuté par l'intermédiaire de la station de base pour recevoir des appels entrants lorsqu'ils sont en mode normal de fonctionnement, dispositifs munis de systèmes avertisseurs d'appels entrants.

L'invention concerne aussi un procédé mis en oeuvre dans un tel appareil et également un dispositif d'abonné convenant à un tel appareil.

L'invention trouve des applications importantes dans les appareils sans fil de type analogique ou ceux répondant à la norme DECT ou autres.

Ces appareils sont conçus essentiellement pour permettre des liaisons entre les dispositifs d'abonné et l'extérieur via le réseau commuté. Cependant, d'autres possibilités sont offertes à l'utilisateur, comme par exemple, la fonction interphone bien connue, qui permet une liaison vocale entre un dispositif d'abonné et la station de base, sans mettre à contribution le réseau téléphonique. Ceci peut être mis à profit pour des applications comme celle qui consiste à la fonction de Garde-bébé.

On trouvera dans le document GB-A 2 304 002, une description d'une telle fonction.

Lorsqu'on effectue une surveillance d'une personne qu'il ne faut pas déranger, l'arrivée d'un appel entrant est considéré comme perturbateur.

La présente invention propose un appareil du genre mentionné dans le préambule qui permet d'utiliser l'appareil dans d'autres fonctions qui ne font pas forcément appel au réseau commuté et qui permet une liaison entre dispositifs d'abonné et qui, surtout, ne dérange pas les personnes surveillées par des bruits perturbateurs.

Pour cela, un tel appareil est remarquable en ce que le premier dispositif d'abonné est muni d'une commande pour être mis dans un mode de surveillance selon lequel les systèmes avertisseurs d'appel entrants sont empêchés de se déclencher.

L'idée de l'invention consiste à utiliser les dispositifs d'abonné qui sont généralement mobiles et qui peuvent donc être disposés facilement dans des endroits non alimentés en courant électrique, en utilisant donc l'accumulateur dont ils sont habituellement pourvus.

La description suivante faite en regard des dessins ci-annexés, le tout donné à titre d'exemple non limitatif, fera bien comprendre comment l'invention peut être réalisée.
La figure 1 montre un appareil conforme à l'invention.
La figure 2 montre un premier organigramme explicitant le fonctionnement de l'appareil conforme à l'invention.
La figure 3 montre un deuxième organigramme explicitant le fonctionnement de l'appareil conforme à l'invention.
La figure 4 montre un troisième organigramme explicitant le fonctionnement de l'appareil conforme à l'invention.
La figure 5 montre un quatrième organigramme explicitant le fonctionnement de l'appareil conforme à l'invention.

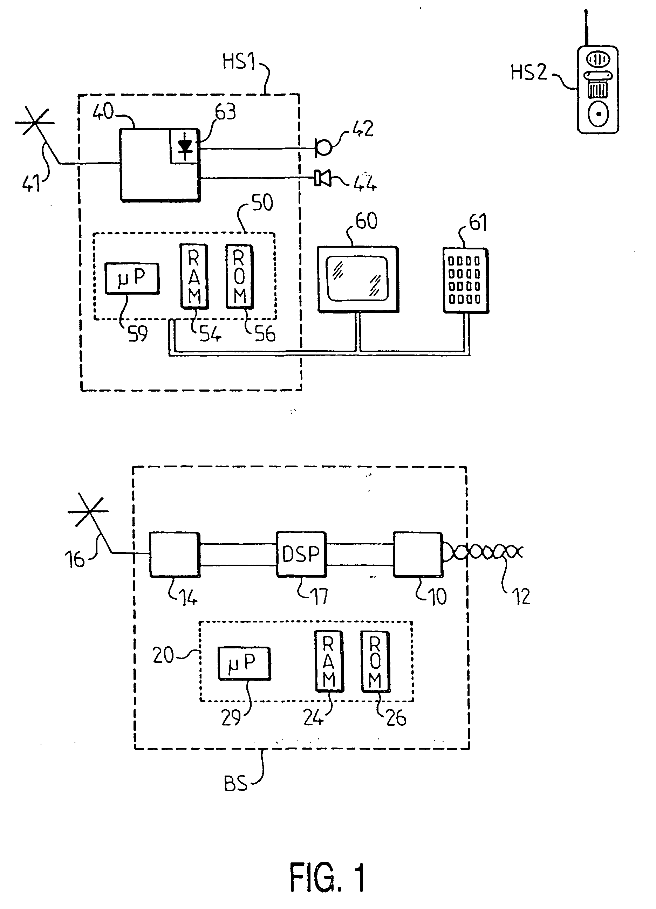

A la figure 1, l'appareil qui est représenté est un appareil répondant aux normes DECT. Il est formé d'une station de base BS et d'une pluralité de dispositifs d'abonné, seuls sont montrés les dispositifs HS1 et HS2. En outre, on a représenté plus en détail le dispositif HS1.

La station de base BS comporte un circuit d'interface de ligne 10 pour se raccorder à la ligne téléphonique 12 et un ensemble d'émission-réception 14 muni d'une antenne 16 pour être en communication par voie radioélectrique avec les dispositifs d'abonné HS1, HS2. Cette station de base comporte en outre, pour traiter toutes les informations de nature analogique, un organe de traitement de signal 17 formé autour d'un processeur de signal DSP qui traite les signaux vocaux notamment. Tous les éléments de cette station de base BS sont gérés par un ensemble de gestion à microprocesseur 20. Cet organe est composé, notamment, de la façon usuelle, d'une mémoire vive 24, d'une mémoire morte 26 contenant les instructions de fonctionnement de l'appareil et d'un processeur de gestion 29.

Le dispositif d'abonné HS1, seul montré en détail (le dispositif HS2 pouvant être de structure identique) comporte un ensemble de communication 40 muni d'une antenne 41 qui lui permet de communiquer avec la station de base BS et de là, avec les autres dispositifs d'abonné HS2, .... Cet ensemble traite les informations en provenance du microphone 42 et fournit aussi les signaux pour un haut-parleur 44. Il est prévu aussi un organe de gestion 50 composé, tout comme l'organe de gestion 20, d'une mémoire vive 54, d'une mémoire morte 56 contenant les instructions de fonctionnement de l'appareil et d'un processeur de gestion 59. Le dispositif HS1 comporte aussi un écran 60 sur lequel différentes informations sont affichées et un clavier 61. Ces combinés sont des mobiles et de ce fait sont alimentés par un accumulateur, non représenté sur la figure.

Selon une caractéristique de l'invention, il est prévu un détecteur de seuil 63 incorporé à l'ensemble de communication 40.

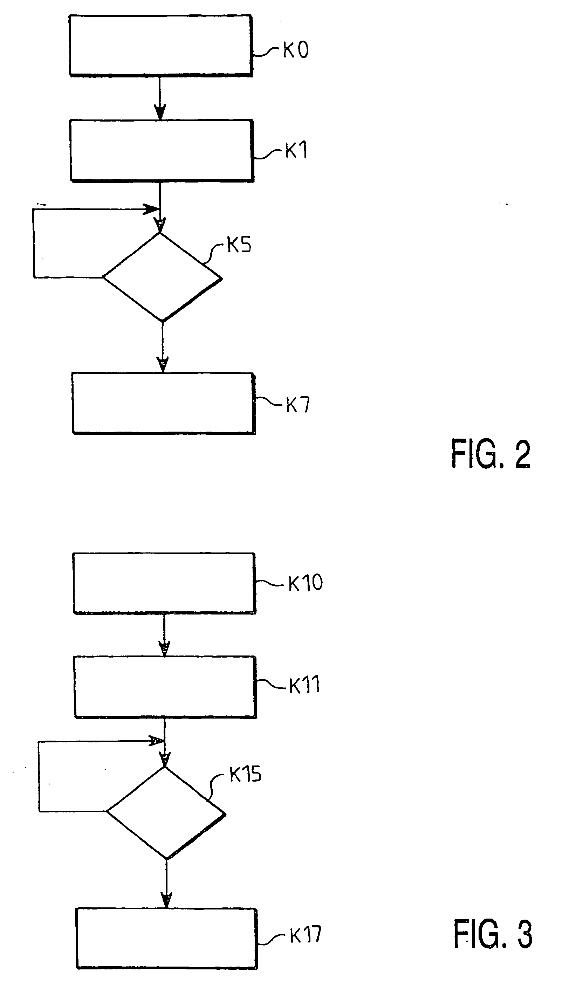

A la figure 2, on montre un organigramme explicitant le fonctionnement d'un appareil conforme à l'invention selon une première variante de réalisation.

Cet organigramme est mis en oeuvre par un ensemble d'instructions contenues dans le dispositif d'abonné, dit dispositif surveillé, impliqué par les fonctions de surveillance d'un sujet passif, c'est le cas plutôt adapté à la surveillance de bébé. Ce dispositif d'abonné est placé dans le local, la chambre, où se trouve le sujet passif.

Cet organigramme commence à la case K0 qui indique un état de repos. Puis on passe à l'état indiqué par la case K1. Cet état K1 consiste à faire apparaître sur l'écran 60, un menu déroulant jusqu'à faire apparaître la rubrique surveillance bébé. Cette rubrique validée a pour effet d'empêcher la sonnerie de se déclencher et de mettre le combiné dans un état spécial dans lequel, lorsqu'il est appelé par un autre combiné (interphone), le microphone est activé automatiquement (éventuellement avec un gain supérieur à celui d'une conversation d'interphonie normale) et toute émission sonore est supprimée. Tant que l'on ne fait pas de manoeuvres supplémentaires qui sont détectées à la case K5, le dispositif d'abonné reste dans cet état surveillé. Une manoeuvre supplémentaire fait passer à la case K7, où la nouvelle action est analysée.

La figure 3 est relative à l'organigramme du dispositif combiné, dit dispositif combiné surveillant. Cet organigramme commence à la case K10 qui indique un état de repos. Puis on passe à l'état indiqué par la case K11. Cet état K11 consiste à appuyer sur une touche dédiée et à composer le numéro du combiné surveillé. Ceci a pour effet de mettre les deux combinés en relation. Le volume du haut-parleur 44 sera mis en position d'écoute des bruits provenant de la chambre du bébé. Cet état de chose se maintient (état surveillant) tant que le clavier du dispositif d'abonné n'a pas été sollicité case K15. Si c'est le cas cette nouvelle action est analysée (case K17).

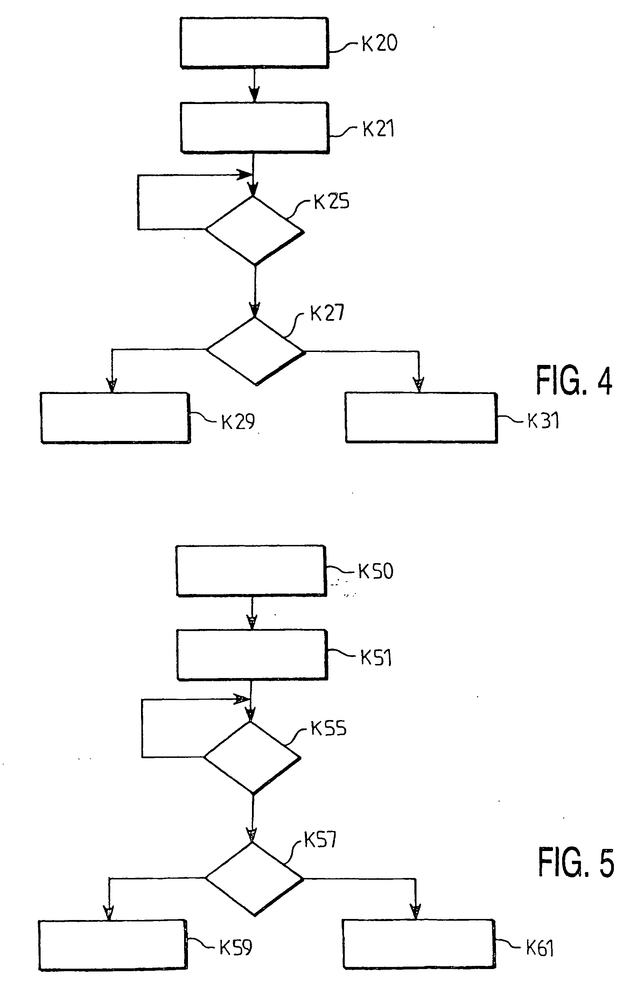

La figure 4 est relative aussi à la fonction de surveillance de sujet passif avec déclenchement de la liaison de surveillance dès qu'un bruit trop fort a été détecté au moyen du détecteur à seuil 63. Ce mode de fonctionnement est avantageux lorsque l'on veut faire des économies sur la charge de l'accumulateur, la liaison n'étant effective que dès qu'un bruit intempestif a été décelé. Les cases K20, K21 et K25 de cet organigramme, semblables aux cases K0, K1 et K5 respectivement n'ont pas à être explicitées. Dès qu'un événement est détecté, ce qui est fait à la case K25, on analyse cet événement à la case K27. On détermine alors si c'est le microphone qui a capté un bruit trop intense. Si oui, alors la case K29 est la case qui indique l'établissement de la liaison de surveillance. La case K31 concerne un autre traitement qui met fin à ce mode de fonctionnement.

Le dispositif surveillant se met à l'état de repos dès que le numéro du dispositif surveillé a été tapé.

Un autre mode de réalisation consiste à la surveillance de sujet actif c'est-à-dire un sujet qui veut de lui-même établir une liaison déjà préétablie en ne faisant que très peu de gestes. Par exemple l'appui d'une seule touche. Ceci est montré à la figure 5 dont l'allure est semblable à celle de la figure 3, les cases K50, K51, K55, K57, K59 et K61 sont à rapprocher respectivement des cases K20, K21, K25, K27 K29 et K31. La seule différence est qu'à la case K57, on détecte l'appui d'une touche pour déclencher la mise en relation.

## Revendications

1. Appareil téléphonique comportant :
- une station de base (**BS**) connectable au réseau commuté,
- au moins un premier et un deuxième dispositif d'abonné (**HS1, HS2**) connectables au réseau commuté par l'intermédiaire de la station de base (**BS**) pour recevoir des appels entrants lorsqu'ils sont en mode normal de fonctionnement, dispositifs munis de systèmes avertisseurs d'appels entrants (**44**),
**caractérisé en ce que** le premier dispositif d'abonné est muni d'une commande pour être mis dans un mode de surveillance selon lequel les systèmes avertisseurs d'appel entrants (**44**) sont empêchés de se déclencher.

2. Appareil téléphonique selon la revendication 1, **caractérisé en ce qu'**une liaison de surveillance est établie entre deux dispositifs d'abonné (HS1, HS2) mis en mode de surveillance sans utiliser le réseau commuté.

3. Appareil téléphonique selon la revendication 1 ou 2 dans lequel lesdits dispositifs d'abonné comportent un microphone (**42**), **caractérisé en ce que** le microphone (**42**) est pourvu d'un plus grand gain dans le mode de surveillance que dans le mode normal pour déclencher la mise en service de ladite liaison de surveillance pour un bruit supérieur à un seuil prédéterminé.

4. Appareil téléphonique selon la revendication 1 ou 2 ou 3 dans lequel lesdits dispositifs d'abonné comportent un clavier (**61**) muni de touches, **caractérisé en ce que** la mise en service de la liaison de surveillance est établie par l'appui d'au moins une touche.

5. Appareil téléphonique selon l'une des revendications 1 à 4, **caractérisé en ce que** le mode de surveillance est établi à partir d'un menu visualisé sur le premier dispositif d'abonné (**HS1**).

6. Procédé pour assurer des liaisons dans un appareil du type indiqué dans les revendications précédentes comportant une station de base (**BS**) connectée au réseau commuté pour recevoir notamment des appels entrants, une pluralité de dispositifs d'abonné (**HS1, HS2**...) rattachés à ladite station de base (**BS**) et muni de système d'avertisseur d'appels entrants, procédé comportant les étapes suivantes :
- mise en un état dit surveillé d'un dispositif d'abonné,
- mise en un état dit surveillant d'un autre dispositif d'abonné
- détermination d'une liaison de surveillance entre le dispositif d'abonné surveillé et le dispositif d'abonné surveillant,
**caractérisé en ce qu'**il comporte en outre une étape :
- mise à l'état silencieux des systèmes avertisseurs d'appels entrants pour les dispositifs d'abonné à l'état surveillé.

7. Procédé selon la revendication 6 **caractérisé en ce que** ladite liaison est effective dès sa détermination.

8. Procédé selon la revendication 6 **caractérisé en ce que** ladite liaison est établie par détection d'un niveau sonore supérieur à un seuil prédéterminé.

9. Procédé selon la revendication 6 **caractérisé en ce que** ladite liaison est établie par appui d'une touche du clavier (**61**) du dispositif d'abonné.

10. Dispositif d'abonné (**HS1**) connectable au réseau commuté par l'intermédiaire d'une station de base (**BS**) et capable d'être mis dans un état dit surveillé dans lequel une liaison est établie avec un deuxième dispositif d'abonné (**HS2**) dit surveillant, comportant un microphone (**42**) susceptible de capter des bruits lorsque le dispositif est à l'état surveillé, des systèmes avertisseurs d'appel entrant (**44**) et un clavier (**61**) pour se mettre dans l'état surveillé ou pour définir une liaison avec le dispositif d'abonné surveillant (**HS2**), **caractérisé en ce qu'**il est muni de moyens (**50**) adaptés à empêcher les systèmes avertisseurs d'appel entrant (**44**) de se déclencher lorsque le dispositif est dans l'état surveillé.

## Patentansprüche

1. Telefongerät mit:
- einer an die Netzwerkverbindung anschließbaren Basisstation (B3),
- mindestens einem ersten und einem zweiten über die Basisstation (BS) an die Netzwerkverbindung anschließbaren Endgerät (HS1, HS2) für den Erhalt der eingehenden Anrufe, wenn sie in normalem Betriebsmodus sind, wobei die Geräte mit Meldesystemen für eingehende Anrufe (44) ausgestattet sind,
**dadurch gekennzeichnet, dass** das erste Endgerät mit eine Steuerung ausgestattet ist, um es in einen Überwachungsmodus umzuschalten, dem zufolge die Meldesysteme für eingehende Anrufe (44) daran gehindert werden, ausgelöst zu werden.

2. Telefongerät nach Anspruch 1, **dadurch gekennzeichnet, dass** eine Überwachungsverbindung zwischen zwei Endgeräten (HS1, HS2), die ohne Verwendung der Netzwerkverbindung in Überwachungsmodus geschaltet wurden, aufgebaut wird.

3. Telefongerät nach Anspruch 1 oder 2, in dem die besagten Endgeräte ein Mikrofon (42) enthalten, **dadurch gekennzeichnet, dass** das Mikrofon (42) im Überwachungsmodus über eine größere Leistung als im normalen Modus verfügt, um bei einem über einem vorbestimmten Grenzwert liegenden Geräusch den Aufbau der besagten Überwachungsverbindung auszulösen.

4. Telefongerät nach Anspruch 1 oder 2 oder 3, in dem die besagten Endgeräte eine Tastatur (61) zur Bedienung enthalten, **dadurch gekennzeichnet, dass** der Aufbau der Überwachungsverbindung über die Betätigung von mindestens einer Taste verläuft.

5. Telefongerät nach einem der Ansprüche 1 bis 4, **dadurch gekennzeichnet, dass** der Überwachungsmodus anhand eines im ersten Endgerät (HS1) angezeigten Menüs aufgebaut wird.

6. Verfahren zur Versicherung von Verbindungen in einem Gerät eines in den vorhergehenden Ansprüchen angegebenen Typs mit einer Basisstation (BS), welche insbesondere für den Erhalt eingehender Anrufe an die Netzwerkverbindung angeschlossen ist, wobei eine Vielzahl von Endgeräten (HS1, HS2...) an die besagte Basisstation (BS) angeschlossen und mit einem Meldesystem eingehender Anrufe ausgestattet sind und das Verfahren folgende Schritte enthält:
- Einrichtung eines so genannten überwachten Zustands in einem Endgerät,
- Einrichtung eines so genannten überwachten Zustands in einem anderen Endgerät
- Bestimmung einer Überwachungsverbindung zwischen dem überwachten Endgerät und dem überwachenden Endgerät,
**dadurch gekennzeichnet, dass** es außerdem einen Schritt enthält zur:
- Stummschaltung der Meldesysteme für eingehende Anrufe bei Endgeräten in überwachtem Zustand.

7. Verfahren nach Anspruch 6, **dadurch gekennzeichnet, dass** die besagte Verbindung ab ihrer Festlegung effektiv ist.

8. Verfahren nach Anspruch 6, **dadurch gekennzeichnet, dass** die besagte Verbindung ausgehend von der Detektion eines Geräuschpegels über einem vorbestimmten Grenzwert aufgebaut wird.

9. Verfahren nach Anspruch 6, **dadurch gekennzeichnet, dass** die besagte Verbindung ausgehend vom Druck auf eine Taste der Tastatur (61) des Endgeräts aufgebaut wird.

10. Endgerät (HS1) mit einer an die Netzwerkverbindung anschließbaren Basisstation (BS) und dazu in der Lage, in einen so genannten überwachten Zustand gebracht zu werden, in dem eine Verbindung mit einem so genannten überwachenden zweiten Endgerät (HS2) aufgebaut wird, mit einem Mikrofon (42) für die mögliche Aufnahme von Geräuschen, wenn das Gerät in überwachtem Zustand ist, mit Meldesystemen für eingehende Anrufe (44) und einer Tastatur (61), um in überwachten Zustand zu wechseln oder um eine Verbindung mit dem überwachenden Endgerät zu definieren (HS2), **dadurch gekennzeichnet, dass** es mit geeigneten Mitteln (50) für die Verhinderung dessen ausgestattet ist, dass die Meldesysteme eingehender Anruf (44) ausgelöst werden, wenn das Gerät in überwachtem Zustand ist.

## Claims

1. A telephone comprising:
- a base station (BS) which can be connected to the switched network
- by means of a first and a second subscriber station (HS 1, HS2) which can be connected to the switched network via the base station (BS) to receive incoming calls when they are in the normal operating mode, which stations comprise warning systems for warning for incoming calls (44), **characterized in that** the first subscriber station has a control to be put in the monitoring mode according to which the warning systems for warning for incoming calls (44) are prevented from being activated.

2. A telephone as claimed in claim 1, **characterized in that** a monitoring link is set up between two subscriber stations (HS1, HS2) put in the monitoring mode without the use of the switched network.

3. A telephone as claimed in claim 1 or 2 in which said subscriber stations comprise a microphone (42), **characterized in that** the microphone (42) has a larger gain in the monitoring mode than in the normal mode for starting the use of said monitoring link for a noise that is higher than a predetermined threshold.

4. A telephone as claimed in claim 1, 2 or 3 in which said subscriber stations comprise a keypad (61) with keys, **characterized in that** putting the monitoring link into service is set up by depressing at least one key.

5. A telephone as claimed in one of the claims 1 to 4, **characterized in that** the monitoring mode is set up on the basis of a menu displayed on the first subscriber station (HS1).

6. A method for ensuring links in a telephone as claimed in one of the preceding claims, comprising a base station (BS) connected to the switched network for receiving notably incoming calls, a plurality of subscriber stations (HS1, HS2, ...) connected to said base station (BS) and comprising a warning system for warning for incoming calls, which method comprises the following steps:
- putting a subscriber station in a mode called monitored mode,
- putting another subscriber station in a mode called monitoring mode,
- determining a link between the monitored subscriber station and the monitoring subscriber station,
**characterized in that** it further comprises one step:
- putting warning systems for warning for incoming calls in the silence mode for the subscriber stations in the monitored mode.

7. A method as claimed in claim 6, **characterized in that** said link is effective from the moment it is determined.

8. A method as claimed in claim 6, **characterized in that** said link is set up by detecting a sound level that is higher than a predetermined threshold.

9. A method as claimed in claim 6, **characterized in that** said link is set up by depressing one key of the keypad (61) of the subscriber station.

10. A subscriber station (HS1), which can be connected to the switched network by means of a base station (BS) and can be put in a mode called monitored mode in which a link is set up to a second subscriber station (HS2) called monitoring station, comprising a microphone (42) which can capture noise when the station is in the monitored mode, warning systems for warning for incoming calls (44) and a keypad (61) for being put in the monitored mode or for defining a link with the monitoring subscriber station (HS2), **characterized in that** it is provided with means (50) adapted to prevent the warning systems for warning for incoming calls (44) from being activated when the station is in the monitored mode.
